Europäisches Patentamt

European Patent Office

Office européen des brevets

(19)

(11) Numéro de publication : **0 344 038 B1**

# (12) FASCICULE DE BREVET EUROPEEN

(45) Date de publication du fascicule du brevet :
02.10.91 Bulletin 91/40

(51) Int. Cl.⁵ : **B23K 26/08**, B23K 26/16, G01V 3/08

(21) Numéro de dépôt : 89401313.5

(22) Date de dépôt : 11.05.89

(54) Détecteur de proximité magnétique destiné notamment à la découpe laser.

(30) Priorité : 20.05.88 FR 8806782

(43) Date de publication de la demande :
29.11.89 Bulletin 89/48

(45) Mention de la délivrance du brevet :
02.10.91 Bulletin 91/40

(84) Etats contractants désignés :
BE DE ES FR GB IT

(56) Documents cités :
EP-A- 1 163 207
DE-U- 1 871 181
US-A- 3 452 178
PATENT ABSTRACTS OF JAPAN vol. 10, no.
222 (M-504)(2278) 02 août 1986, & JP-A-61
60285 (NEC CORP)

(73) Titulaire : RENAULT AUTOMATION
8/10 avenue Emile Zola
F-92109 Boulogne-Billancourt (FR)

(72) Inventeur : Thurier, Yvan
6, rue des Charmes
F-94320 Thiais (FR)

(74) Mandataire : Saint Martin, René et al
Régie Nationale des Usines Renault 8 & 10,
avenue Emile Zola
F-92109 Boulogne Billancourt (FR)

EP 0 344 038 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte au domaine du découpage par rayonnement laser. Elle vise plus particulièrement un détecteur de proximité magnétique destiné à être monté sur une buse de découpe laser.

Il existe de nombreux types de détecteurs de proximité magnétiques bien répandus dans les domaines de l'assemblage, de la manutention et des machines-outils. Ceux-ci doivent cependant être étudiés de façon minutieuse pour une adaptation à la découpe laser.

L'invention propose ainsi une conception de détecteur de proximité qui soit la plus simple et la plus économique possible pour une application spécifique à la découpe laser.

Suivant une particularité essentielle, un tel détecteur de proximité magnétique du type comportant un électro-aimant associé à un capteur de proximité magnétique est caractérisé en ce que :

— le capteur de proximité magnétique est cylindrique et annulaire et pourvu d'un bobinage logé à l'intérieur d'une première carcasse,

— l'électro-aimant est cylindrique et annulaire et logé à l'intérieur d'une seconde carcasse, pour assurer une fonction de préhension magnétique des déchets de découpe,

— le détecteur de proximité comprend un pot cylindrique et annulaire qui renferme centrés sur son axe ce capteur de proximité et cet électro-aimant de préhension magnétique, et comporte un alésage central susceptible de laisser passer axialement une buse de découpe laser.

Le circuit magnétique proposé associé à deux bobinages appropriés permet ainsi d'assurer une fonction double de capteur de distance et de préhenseur magnétique de déchets, tout en permettant le passage axial d'une buse de découpe laser.

D'autres particularités et avantages de l'invention ressortiront plus clairement de la description qui suit de deux modes de réalisation préférés, donnés à titre d'exemples en référence aux dessins annexés dans lesquels :

— la figure 1 représente une vue en coupe axiale d'un premier mode de réalisation de ce détecteur de proximité à simple électro-aimant de préhension de déchets,

— et la figure 2 représente une vue en coupe axiale d'un second mode de réalisation de ce détecteur de proximité à double électro-aimant de préhension de déchets.

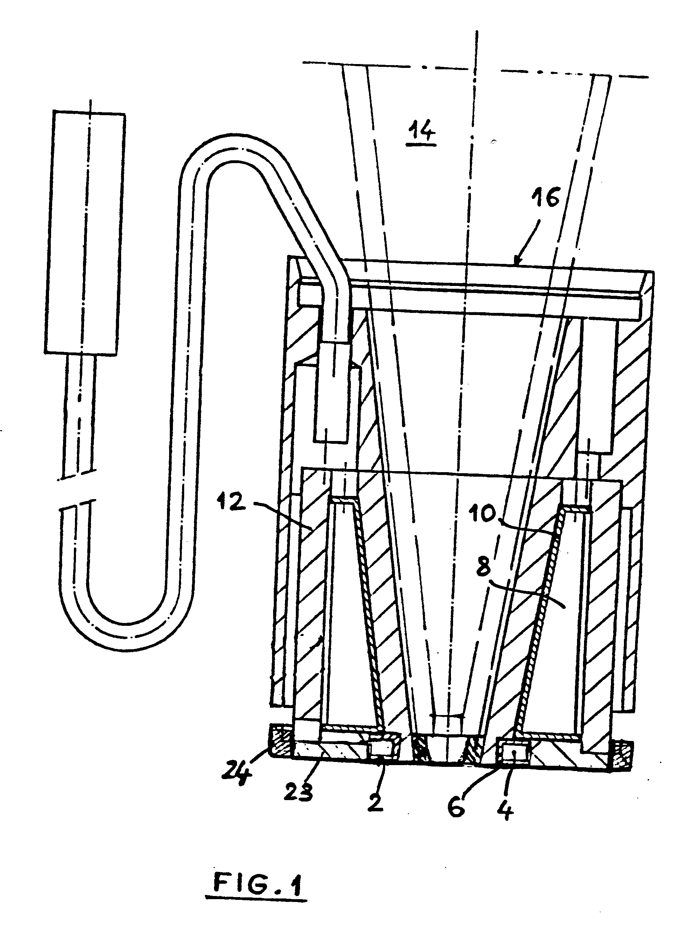

Conformément à la figure 1, ce détecteur de proximité magnétique comprend :

— un capteur de proximité magnétique 2 cylindrique et annulaire, pourvu d'un bobinage 4 logé à l'intérieur d'une première carcasse 6,

— un électro-aimant 8 cylindrique et annulaire, logé à l'intérieur d'une seconde carcasse 10,

— et un pot cylindrique et annulaire 12 renfermant ce capteur de proximité 2 et cet électro-aimant 8 de préhension magnétique, susceptible de laisser passer de façon axiale, une buse 14 de découpe laser, et logé lui-même à l'intérieur d'un embout 16 de connexions électriques.

La mesure, au moyen du capteur 2 des variations de caractéristiques magnétiques de ce circuit engendrées par la proximité plus ou moins importante d'une tôle, fournit une information analogique image de cette proximité. Cette information est exploitée pour réguler la distance buse de découpe laser — tôle au cours de la découpe.

L'électro-aimant 8 alimenté en courant continu génère un champ magnétique d'intensité suffisante pour "aspirer" un déchet de découpe au moment où celui-ci se détache de la tôle. Il assure ainsi une fonction de préhension magnétique des déchets de découpe laser.

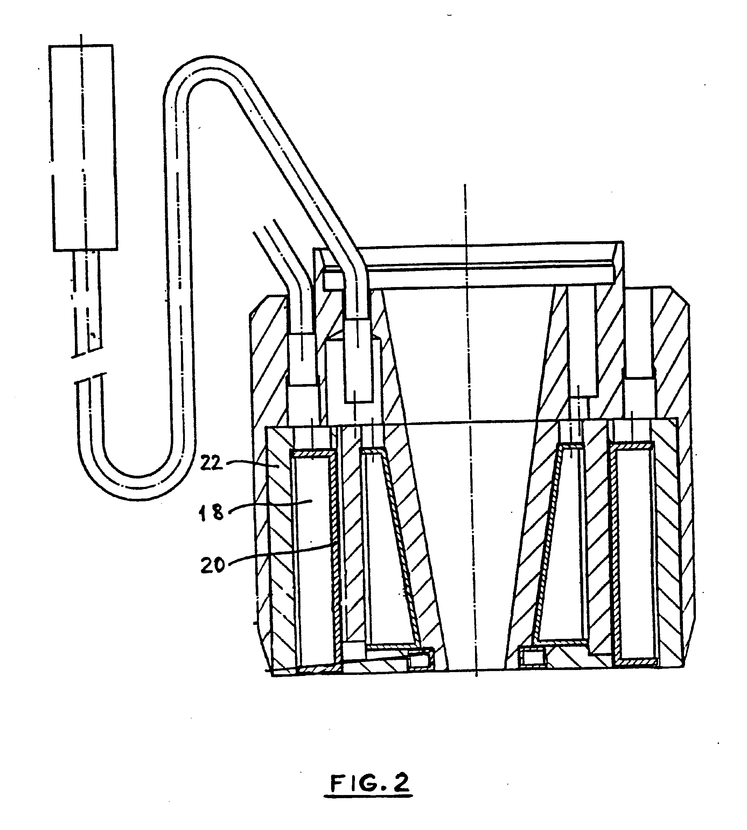

Une variante du détecteur de proximité précédemment décrit est illustrée à la figure 2 où le champ magnétique de préhension des déchets de découpe laser présente une intensité et une répartition améliorées par l'intermédiaire d'un second électro-aimant 18 également cylindrique et annulaire. Cet électro-aimant ceinture axialement le capteur de proximité magnétique 2 et le premier électro-aimant 8, et est logé à l'intérieur d'une troisième carcasse 20 et d'un pot extérieur 22.

Dans le mode de réalisation selon la figure 1, on a adjoint au détecteur un bouclier thermique plan 23 qui évite tout risque d'incrustation de particules métalliques générées notamment au cours du processus d'amorçage de la découpe.

Le bouclier 23 est réalisé dans une céramique d'alumine de faible épaisseur (0,2 mm environ) qui peut être collée par l'une de ses faces sur l'extrémité du capteur 2 et maintenu par un collier 24.

Le détecteur ainsi modifié possède, par voie de conséquence, une durée de vie accrue du fait que la céramique du bouclier résiste aux particules.

## Revendications

1. Détecteur de proximité magnétique destiné à la découpe laser, du type comportant un electro-aimant (8) associé à un capteur de proximité magnétique (2), caractérisé en ce que :

— le capteur de proximité magnétique (2) est cylindrique et annulaire, et pourvu d'un bobinage (4) logé à l'intérieur d'une première carcasse (6),

— l'électro-aimant est cylindrique et annulaire (8) et logé à l'intérieur d'une seconde carcasse (10) pour assurer une fonction de préhension magnétique des déchets de découpe,

— le détecteur de proximité comprend un pot cylindrique et annulaire (12) renfermant, centrés sur son axe, ce capteur de proximité (2) et cet électro-aimant de préhension magnétique (8), et comportant un alésage central susceptible de laisser passer axialement une buse (14) de découpe laser.

2. Détecteur suivant la revendication 1, caractérisé en ce que le pot cylindrique et annulaire (12) est logé à l'intérieur d'un embout (16) de connexions électriques.

3. Détecteur suivant la revendication 1 ou 2, caractérisé en ce qu'il incorpore un second électro-aimant (18) cylindrique et annulaire qui ceinture axialement le capteur de proximité magnétique (2) et le premier électro-aimant (8), et qui est logé à l'intérieur d'une troisième carcasse (20) et d'un pot extérieur (22).

4. Détecteur suivant l'une quelconque des revendications 1 à 3, caractérisé par le fait que l'extrémité du capteur de proximité magnétique porte un bouclier thermique (23).

5. Détecteur suivant la revendication 4, caractérisé par le fait que le bouclier thermique est constitué par une céramique d'alumine collée de faible épaisseur.

## Claims

1. A magnetic proximity detector intended for laser cutting of the type comprising an electromagnet (8) associated with a magnetic proximity sensor (2) characterised in that :
— the magnetic proximity sensor (2) is cylindrical and annular and provided with a winding (4) accommodated within a first casing (6),
— the electromagnet (8) is cylindrical and annular and accomodated within a second casing (10) to provide a function of magnetically catching the cutting waste, and
— the proximity detector comprises a cylindrical annular pot (12) which, centered on its axis, contains said proximity sensor (2) and said magnetic waste-catching electromagnet (8) and comprising a central bore capable of allowing a laser cutting nozzle (14) to pass axially therein.

2. A detector according to claim 1 characterised in that the cylindrical annular pot (12) is accommodated within an end portion (16) of electrical connections.

3. A detector according to claim 1 or claim 2 characterised in that it incorporates a second cylindrical annular electromagnet (18) which axially surrounds the magnetic proximity sensor (2) and the first electromagnet (8) and which is accommotated within a third casing (20) and an external pot (22).

4. A detector according to any one of claims 1 to 3 characterised in that the end of the magnetic proximity sensor carries a thermal shield (23).

5. A detector according to claim 4 characterised in that the thermal shield is formed by a glued alumina ceramic material of small thickness.

## Patentansprüche

1. Magnetischer Annäherungsdetektor zum Laserschneiden, der einen einem magnetischen Annäherungsfühler (2) zugeordneten Elektromagneten (8) aufweist, dadurch gekennzeichnet daß
— der magnetische Annäherungsfühler (2) zylindrisch und ringförmig ist, sowie mit einer Wicklung (4) versehen ist, die im inneren eines ersten Gehäuses (6) angeordnet ist,
— der Elektromagnet (8) zylindrisch und ringförmig ist und im inneren eines zweiten Gehäuses (10) angeordnet ist zur Gewährleistung einer magnetischen Unterdrückung von überzähligen Schnitten und
— daß der Annäherungsfühler einen zylindrischen und ringförmigen Topf (12) aufweist, der, auf seiner Achse zentriert, den Annäherungsfühler (2) und den Elektromagneten (8) zur magnetischen Unterdrückung umschließt und eine zentrale Bohrung aufweist um eine Laserschneidspitze (14) axial hindurchzulassen.

2. Detektor nach Anspruch 1, dadurch gekennzeichnet, daß der zylindrische und ringförmige Topf (12) im inneren einer mit elektrischen Anschlüssen versehenen Hülle angeordnet ist.

3. Detektor nach Anspruch 1 oder 2, dadurch gekennzeichnet, daß er einen zweiten zylindrischen und ringförmigen Elektromagneten (18) aufweist, welcher axial den magnetischen Annäherungsfühler (2) und den ersten Elektromagneten (8) umgibt und der im inneren eines dritten Gehäuses (20) und eines zweiten Außentopfes (22) angeordnet ist.

4. Detektor nach einem der Anprüche 1-3, dadurch gekennzeichnet, daß das Ende des magnetischen Annäherungsfühlers eine thermische Abschirmung (23) trägt.

5. Detektor nach Anspruch 4, dadurch gekennzeichnet, daß die thermische Abschirmung aus einer aufgeklebten Tonerdekeramik geringer Dicke besteht.

FIG.1

22

18

20

**FIG.2**